# EUROPEAN PATENT SPECIFICATION

(11) **EP 1 984 974 B1**
(45) Date of publication and mention of the grant of the patent: **23.09.2009**
(21) Application number: 07715838.4
(22) Date of filing: 13.02.2007
(51) Int. Cl.: H01M 8/22, H01M 8/08, H01M 8/24, B01D 61/44

(54) **DEVICE AND METHOD FOR PERFORMING A REVERSED ELECTRODIALYSIS PROCESS**
EINRICHTUNG UND VERFAHREN ZUR DURCHFÜHRUNG EINES UMGEKEHRTEN ELEKTRODIALYSEPROZESSES
DISPOSITIF ET PROCÉDÉ PERMETTANT DE RÉALISER UN PROCESSUS D'ÉLECTRODIALYSE INVERSÉE

(30) Priority: 14.02.2006 NL 1031148
(43) Date of publication of application: 29.10.2008
(73) Proprietor: Redstack B.V., NL-8606 JR Sneek (NL)
(72) Inventor: HAMELERS, Hubertus, Victor, Marie, NL-6866 BX Heelsum (NL); POST, Jan, Willem, NL-3871 JK Hoevelaken (NL); METZ, Sybrandus, Jacob, NL-8447 DV Heerenveen (NL)
(74) Representative: Bruin, Cornelis Willem
(86) International application number: PCT/NL2007/000039
(87) International publication number: WO 2007/094659

(56) References cited:
- EP-A- 0 013 113
- BE-A2- 901 696
- GB-A- 731 729
- "Brochure: Combining scientific excellence with commercial relevance" December 2004 (2004-12), WETSUS CENTRE FOR SUSTAINABLE WATER TECHNOLOGY , LEEUWARDEN , XP002407880 Retrieved from the Internet: URL:http://www.wetsus.nl/downloads/Researc h%20brochure%20December%202004.pdf> [retrieved on 2006-11-15] *Laatste pagina* & "Energie uit water" December 2004 (2004-12), WETSUS CENTRE FOR SUSTAINABLE WATER TECHNOLOGY , LEEUWARDEN Retrieved from the Internet: URL:http://ww.wetsus.nl/nl/Themes5.htm> [retrieved on 2006-11-15] the whole document & "Wetsus Nieuwsbrief Nummer 19" 1 October 2004 (2004-10-01), WETSUS CENTRE FOR SUSTAINABLE WATER TECHNOLOGY , LEEUWARDEN Retrieved from the Internet: URL:http://www.wetsus.nl/nieuwsbrief/nieuw s19.htm> [retrieved on 2006-11-15] paragraphs [0003], [0004] & "Wetsus Nieuwsbrief Nummer 22" 13 January 2005 (2005-01-13), WETSUS CENTRE FOR SUSTAINABLE WATER TECHN

## Description

The present invention according to a first aspect relates to a device for performing a reversed electrodialysis process.

According to a further aspect the invention relates to a method for generating electric energy, wherein use is made of the device according to the invention.

Electrodialysis is a process, which amongst others is used in the production of drinking water from salt water or brackish water. In this process, a number of anion exchange membranes and cation exchange membranes are placed alternatingly between an anode and a cathode. When a feed of salt water or brackish water is pumped through the compartments, formed between the anion exchange membrane and cation exchange membrane, no directed displacement of ions between the compartments takes place as long as no voltage is applied between the anode and cathode. If however a voltage is applied between the anode and cathode, then the positive ions will be inclined to move to the cathode, while the negative ions will be inclined to move to the anode. However, the negative ions cannot pass the cation exchange membranes and the positive ions cannot pass the anion exchange membranes. As a result of this, the initially identical feed will change in alternating concentrated and diluted electrolyte solutions.

The electrodialysis process described above may be reversed to generate electric energy. This principle of generating electric energy with the aid of reversed electrodialysis was already described in 1955 in GB731729. In reversed electrodialysis, as such also a number of anion exchange membrane and cation exchange membranes are placed alternating between an anode and a cathode. However, the compartments formed between the anion exchange membrane and cation exchange membrane are now loaded alternating with concentrated and diluted electrolyte solutions, such as salt water or brackish water and fresh water. A unit of an anion exchange membrane and a cation exchange membrane, of which one separates a concentrated and a diluted electrolyte solution and the other shields one of the electrolyte solutions on the other side, is designated a dialytic cell.

Due to the concentration differences between the concentrated and diluted electrolyte solutions, ions will be inclined to move from the high to the low concentrations in order to level the concentrations. However, anions cannot pass the cation exchange membranes and are only allowed to pass through the anion exchange membranes. For the cations the opposite applies.

Due to this limitation of the freedom of movement of the cations and anions, there will be nett transport of cations and anions in opposite directions. A prerequisite for this opposite ion transport is that the electric neutrality of the solution is maintained. In the dialytic cell this takes place due to the fact that at the moment of the in- or outflow of a cation, an anion flows out or in. However, in the outer compartments, where the electrodes are placed, this is not possible. In these electrode compartments the electric neutrality is maintained, -because at the anode oxidative and at the cathode reductive dissociation of water takes place. During this acid or base is formed. It is also possible that electrolytes, such as Cl- take part in oxidation or reduction reactions. By electrically connecting the anode and cathode, electrons may flow from the anode to the cathode, whereby an electric current is created.

The reactions taking place in the anode and cathode compartments may be presented as follows:
Anode reaction(s):
   (1) H₂O → ½ O₂ + 2 H⁺ + 2e⁻ (-1.23 V)
   (2) 2 Cl⁻ -> Cl₂ (g) + 2e⁻ (-1.36 V)
Cathode reaction:
   (3) 2 H₂O + 2 e⁻ -> H₂ (g) + 2 OH⁻ (-0.83 V)

A problem associated with the above mentioned oxidation and reduction reactions at the anode and cathode, is that an energy investment in the form of an overpotential must be made in order to let these reactions proceed. In general it is assumed that this overpotential for a reversed electrodialysis cell is around 6 V. An average reversed electrodialysis cell, which applies sea water and river water, has a membrane potential of around 80 mV. This means that more than 70 membranes are required to provide enough electric potential to let the electrode reactions take place.

In addition to this, the formation of gasses may cause complications. Therefore, gasses formed must be removed as quickly as possible. For this a separate gas treatment installation is required.

Also, the high pH in the cathode compartment may lead to problems, due to formation of scaling of for example calcium carbonate.

In order to circumvent these problems, J. Jugar-Grodzinski and R. Kramer (Ind. Chem. Process. Des. Dev. 1986, 25, 443-449) tested a combination of two electrochemical half cells and a reversed electrodialysis apparatus. The apparatus tested by them has electrodes made from zinc foil. In the electrode compartment furthermore a concentrated salt solution is present, comprising zinc chloride. Because of the use of zinc electrodes and the presence of zinc chloride, use can be made of the following electrode reaction: Zn ⇄ Zn²⁺ + 2 e⁻. This reaction proceeds at the anode in the direction of the oxidative reaction, and at the cathode in the direction of the reductive reaction.

A problem associated with this system is that the mass and area of the electrodes are not well defined, because the anode dissolves and the cathode grows. Due to this regeneration of the electrodes by means of phase reversal is necessary.

Furthermore the electrochemical half cells used still require a relatively high overpotential.

In addition to this the use of zinc is associated with riscs because of the toxicity of this element, especially in dissolved form.

The brochure "Combining scientific excellence with commercial relevance; December 2004 (2004-12) [retrieved on 2006-11-15], WETSUS CENTRE FOR SUSTAINABLE WATER TECHNOLOGY , LEEUWARDEN , retrieved from the Internet: <URL:http://www.wetsus.nl/downloads/Researc h%20brochure%20December%202004.pdf>" discloses a device suitable for reversed electrodialysis for producing electrical energy based on an Fe(II)/ Fe(III) oxidation/reduction system and having between electrode compartments a number of electrolyte compartments separated by anion or cation exchange membranes.

EP-A-0013113 discloses an apparatus for reversed electrodialysis comprising alternating compartments with high and low osmotic electrolytic solutions between cationic and anionic membranes and electrodes with Fe(II) for oxidation at the anode and Fe(III) for reductions at the cathode and cycling of the iron solutions. Further a bipolar membrane is foreseen for neutralising the acidic cations and basic anions through the membrane.

Between the electrode compartments and the abutting electrolyte compartments acid (proton) leakage can occur.

The present invention aims at providing improvements in relation to the above mentioned problems of the reversed electrodialysis processes from the state of the art.

It has now been found that one or more of the above mentioned problems may be circumvented by using the Fe(II)/Fe(III) redox couple for the transfer of the electrons to and from the anode and cathode. The invention therefore, according to a first aspect, relates to a device according to claim 1.

The device according to the invention may be used for performing a reversed electrodialysis reaction. The skilled person will understand the basic requirements which such a device must comply with.

The device according to the invention is defined in claim 1. It comprises a number of anode compartments provided with an anode, placed in an anode fluidum and a number from the anode compartments separated cathode compartments provide with a cathode, placed in a cathode fluidum. As such, the anode compartment and cathode compartment are suitable for holding the anode fluidum and cathode fluidum. The term fluidum comprises within the present invention all media, wherein molecules and/or ions with a low molecular weight (Mw < 300 Da) may undergo diffusion movement including a gel, wherein the diffusion movement may be somewhat limited. The fluidum preferably comprises an aqueous medium, including a gel on a water basis. With a number of in this application is meant at least one.

The anode and cathode are manufactured from suitable materials. The choice of suitable materials for the anode and cathode are within the ambit of the skilled person. For example, selection may be made form carbon or a different conducting material. The use of carbon is preferred, because of the good electric conductance, price and chemical inertion of this material.

The anode compartments and cathode compartments are separated by a number of cation exchange membranes and anion exchange membranes, which are placed alternatingly between the cathode and anode. Cation exchange membranes and anion exchange membranes are known in the art. The present invention does not make special requirements for the cation exchange membranes and anion exchange membranes which are used, apart from the requirements which are necessary for a proper functioning of a reversed electrodialysis device. These are in particular that a cation exchange membrane essentially does not allow anions to pass and an anion exchange membrane essentially does not allow cations to pass. It is also preferred if anion exchange membranes and cation exchange membranes essentially do not allow water to pass.

Examples of suitable anion exchange membranes are Aciplex A201 (Asahi Chemical industry Co., Japan), Selemion ASV (Asahi Glass Co.Ltd, Japan), FAS (Fuma-tech, GMBH, Germany), AR204szra (Ionics, Inc, United States of America), Neosepta AM-1 (Tokuyama Co., Japan), Ralex AMH-PES (Mega, Czech Republic).

Examples of suitable cation exchange membranes are Aciplex K-501SB (Asahi Chemical Industry Co., Japan), Nafion N-117 (DuPont Co., US), FKS (FuMA-Tech GmbH, Germany), Neosepta CMX (Tokuyama Co., Japan), Ralex CM-PES (Mega, Czech Republic).

Because the major requirement is that the cation exchange membranes and anion exchange membranes are placed alternating between the anode and cathode, the number of cation exchange membranes may exceed the number of anion exchange membranes. Alternatively the number of anion exchange membranes may exceed the number of cation exchange membranes. As also the requirement that the cation exchange membranes and anion exchange membranes are present alternatingly must be complied with, the number of cation exchange membranes and anion exchange membranes will differ at the most by one.

Between the cation exchange membranes and anion exchange membranes compartments, the electrolyte compartments, are formed. These electrolyte compartments are filled alternating with low osmotic electrolyte solutions, having low electrolyte concentrations, and high osmotic electrolyte solutions, having electrolyte concentrations higher than the low osmotic electrolyte solutions. With the term electrolyte solutions is meant, a solution of a number of positively and negatively ionised chemical species. As such, each cation exchange membrane or anion exchange membrane separates an electrolyte solution having a high electrolyte concentration from an electrolyte solution having a low electrolyte concentration. It must be understood that high and low are relative terms. It is also the relative relationship of the electrolyte concentrations in two abutting electrolyte compartments, that provides the driving force behind the ion transport.

As such, an electrolyte solution may, under certain circumstances, depending on the solution for comparison with which it is compared, be designated as having a high electrolyte concentration and under different circumstances a low electrolyte concentration. As such, brackish water may in comparison to fresh water have a high electrolyte concentration. In comparison to salt water it may however have a low electrolyte concentration. Furthermore, salt water in comparison to salt water concentrates, for example obtained from electro dialyses processes for drinking water production, may have a low electrolyte concentration.

In view of the above suitable sources of electrolyte solutions having a high electrolyte concentration may be selected from salt water, for example from seas or oceans; brackish water, for example from river mouths; salt water concentrates, for example obtained from electrodialysis processes. Electrolyte solutions having low electrolyte concentrations may be selected from fresh water, for example from lakes or rivers; salt water, for example from seas or oceans; or brackish water, for example from river mouths. The electrolyte solutions having high and low electrolyte concentrations, are passed preferably in a continuous flow through the electrolyte compartments.

In the device according to the invention use is made of the following electrode reaction: Fe²⁺ = Fe³⁺ + e⁻. This reaction proceeds at the anode in the direction of the oxidative reaction and in the cathode in the direction of the reductive reaction.

Depending on the pH Fe(II) and Fe(III) form oxides/hydroxides that are poorly soluble. It is necessary to prevent formation of such oxides/hydroxides. According to the invention it is therefore required that Fe(II) and Fe(III) are present in dissolved form in the anode fluidum and/or cathode fluidum, meaning in the form of ions which are complexed or not. This is for example possible by selecting the pH of the anode fluidum and/or cathode fluidum, such that the formation of Fe(II) and Fe(III) oxides/hydroxides is prevented. In general low pH values are suitable for this. As such, the invention according to a preferred embodiment provides a device wherein the anode fluidum and/or cathode fluidum have a pH value of around 0-3, more preferably of around 2-3.

The concentration of Fe(III) ions and Fe(II) ions in dissolved form preferably has a value, such that the mass transport of reacting iron species (Fe(II) at the anode and Fe(III) at the cathode) is not limiting. As will be clear to the skilled person, the mass transport of iron species is also dependant on the mixing of the anode fluidum and cathode fluidum and the current density at the anode/cathode. On the basis of his knowledge, the skilled person will therefore be able to determine suitable concentrations of Fe(III) ions and Fe(II) ions in the process conditions used. A total amount of dissolved iron (Fe(II) and Fe(III)) in the order of minimal 5 mM, such as minimal 10 mM in general is sufficient in the general process conditions for a reversed electrodialysis process.

In relation to the upper limit of the concentration of Fe(II) ions and Fe(III) ions there are almost no limitations. The major limitation is that it is preferred that Fe(II) ions and/or Fe(III) ions are essentially dissolved and maintain dissolved. Therefore, iron preferably is added to maximal 95%, more preferably maximal 90%, most preferably maximal 80% of the saturation (maximal solubility) at the process conditions used, of the salt wherein it is supplied. The skilled person will understand that the saturation will depend on the process conditions, such as temperature, pH and presence of other ions in solution. On the basis of his knowledge of the art the skilled person will be able to determine the saturation degree of iron salts.

For certain salts (for example FeCl₃) the saturation degree under certain conditions is as high as around 11 mol g/l. As such, the total amount of dissolved iron will be within the range of 5 mM - 10 M. For example the total amount of dissolved iron will be within the range of 10 mM - 1 M, more preferably from 10 mM - 200 mM.

In order to limit changes of the potential of the cathode and anode, it is furthermore preferred that the fraction dissolved Fe(II) in comparison to the total amount of dissolved iron (Fe(II) + Fe(III)) in the anode fluidum is within the range 0.2-0.8, preferably 0.4-0.6, and more preferably about 0.5. For the cathode fluidum this fraction preferably is within the range 0.8-0.2, preferably 0.6-0.4, and more preferably this fraction is about 0.5. It will be understood that the fraction dissolved Fe(III) ions in the node fluidum and cathode fluidum is complementary to the fraction dissolved Fe(II) ions.

Fe(II) and Fe(III) may be introduced in the system in the form of soluble salts, such as FeCl₂; FeCl₃, Fe₂(SO₄) Fe₃(SO₄)₂, or combinations thereof.

According to a preferred embodiment of the device, it is preferred if there is no osmotic pressure between the anode fluidum and cathode fluidum and the electrolyte solutions in the electrolyte compartments directly abutting the anode compartment and cathode compartment. The osmotic pressure of the anode fluidum and cathode fluidum may be adjusted by adjusting the concentration of iron ions and/or by adding different soluble compounds, such as electrolytes, for example NaCl or a different salt.

The separation between the anode compartments and cathode compartments and the abutting electrolyte compartments are formed by a bipolar membrane, comprising an anion exchange membrane and a cation exchange membrane. When using a bipolar membrane as a separation between the cathode compartment and the abutting electrolyte compartments, the cation exchange part of the bipolar membrane is directed towards the cathode. When using a bipolar membrane as a separation between the anode compartment and the abutting electrolyte compartments, the anion exchange membrane of the bipolar membrane is directed to the anode. Due to the water fission in the bipolar membrane, similar to the situation in an anion exchange membrane, nett transport of protons may take place to the cathode compartment and from the anode compartment.

According to a further embodiment, the device according to the invention comprises means for regenerating the Fe(II) used at the anode and/or the Fe(III) used at the cathode. By regenerating Fe(II) and/or Fe(III) a system is created with minimal loss of reagents, required for the electrode reactions.

Fe(II) may for instance be regenerated from Fe(III) by reducing Fe(III) at the cathode to Fe(II). This may simply take place at the cathode. Fe(III) may for example be regenerated from Fe(II) by oxidising Fe(II) at the anode to Fe(III). This may simply take place at the anode. As such, the invention according to a further preferred embodiment provides a device wherein the means for regenerating the Fe(II) used at the anode and the Fe(III) used at the cathode comprise means for transferring the cathode fluidum to the anode and transferring the anode fluidum to the cathode.

The means for transferring the anode fluidum and cathode fluidum may be any means suitable for tranferring a fluidum. These means may comprise common conduits and pumping systems.

The transfer of the anode fluidum to the cathode compartment and of the cathode fluidum to the anode compartment may take place directly by pumping the anode fluidum and/or cathode fluidum. It will be clear that the anode fluidum herein transforms to the cathode fluidum and visa versa.

It should be prevented that the anode and cathode are shortcircuited via contact between the anode fluidum and cathode fluidum. This may cause loss of the electric efficiency of the system. According to a preferred embodiment therefore in the device according to the invention the means for transferring the anode fluidum to the cathode and/or the means for transferring the cathode fluidum to the anode are designed, such that shortcircuiting of the anode and cathode via contact between the anode fluidum and cathode fluidum is prevented.

In order to prevent shortcircuiting of the anode and cathode via contact between the anode fluidum and cathode fluidum, the device according to the invention is provided with a compartment for holding an amount of the anode fluidum, the anode fluidum buffer compartment, and a compartment for holding an amount of the cathode fluidum, the cathode fluidum buffer compartment. The means for transferring the anode fluidum to the cathode compartment in this embodiment are suitable for transferring the anode fluidum to the anode fluidum buffer compartment and from there to the cathode compartment. The means for transferring the cathode fluidum to the anode compartment in this embodiment are suitable for transferring the cathode fluidum to the cathode fluidum buffer compartment and from there to the anode compartment. Because the anode fluidum and cathode fluidum are not transferred directly to the cathode compartment and anode compartment, respectively, but first to the buffer compartments in between, direct fluid contact between the anode compartment and the cathode compartment and thereby short circuiting of the anode and cathode is prevented.

The moment of regenerating Fe(II) and/or Fe(III) may be selected on the basis of measurements of anode and/or cathode potential, relative to a reference electrode, such as the standard hydrogen electrode or the Ag/AgCl electrode. When the anode and/or cathode deviates from a predetermined reference value, it may be decided to regenerate Fe(II) and/or Fe(III). Alternatively the coulomb current may serve as a measurement parameter for determining the regeneration moment. By measuring the coulomb current it may determined how many electrons have flown through the electric system, thus it may be determined how much Fe(II) and Fe(III) have reacted at the anode and cathode. Thus, it may be determined whether or not regeneration is desired and/or necessary. Also the change of the pH of the anode fluidum and/or cathode fluidum may be used as measurement parameter, for which a reference value may be predetermined. For each electron which is absorbed at the anode or elicited at the cathode, a proton is essentially irreversibly exchanged in those embodiments that make use of anion exchange membranes or bipolar membranes respectively as separation between the anode compartment and cathode compartment and the electrolyte compartments. Thus, by determining the pH change it may also be determined how much Fe(II) and Fe(III) have reacted at the anode and cathode. Furthermore, the pH value is of importance for maintaining Fe(II) and Fe(III) ions in solution.

The invention according to a further aspect relates to a method for generating electric energy with the use of the device according to the invention. Essentially this method comprises providing a device according to the invention and electrically connecting in a suitable fashion of the anode and cathode, such that a close electric circuit is formed. The generation of the electric energy will proceed further by itself. The measurements necessary for maintaining the reversed electro dialyses process will be known to the skilled person.

The invention is further illustrated with reference to the following figures, which are solely meant as illustration and for which it is not intended that they limit the scope of the invention as presented in the claims.

Figure 1 shows a schematic overview of a device for performing an reversed electrodialysis process not in accordance with the invention.

Figure 2 schematically shows an embodiment of the device according to the invention.

Figure 3 schematically shows a further embodiment of the device according to the invention.

Figure 4 shows the cathode potential as a function of the current density.

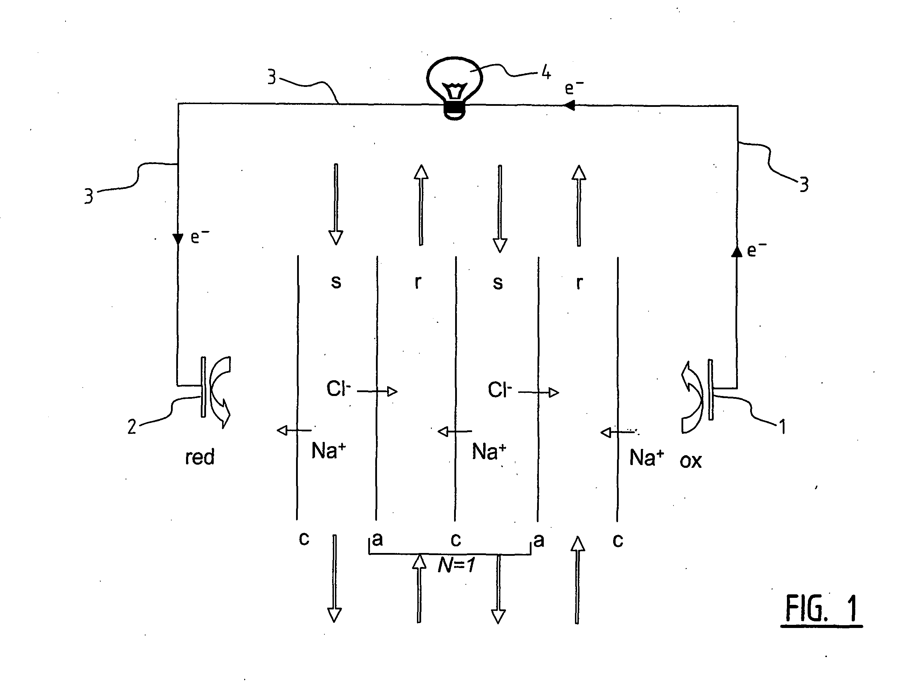

Figure 1 schematically shows an overview of a reversed electrodialysis process. As may be seen in figure 1, a number of cation exchange membranes (c) is placed between the anode (1) and cathode (2). Between the anion exchange membranes (a) and cation exchange membranes (c) electrolyte compartments are formed, wherein alternatingly seawater (s) and river water (r) flows. Due to the concentration differences of electrolytes in the seawater (s) and river water (r), the electrolytes in the seawater (s) will be inclined to move to the river water (r), to level the concentrations. For simplicity in figure 1 only sodium and chlorine ions are presented as positive and negative ions.

As the anion exchange membranes (a) only allow anions to pass and the cation exchange.membranes (c) only allow cations to pass, transport of anions and cations will proceed in opposite directions. The anions (Cl⁻) will move in the direction of the anode (1), and the cations (Na⁺) will move in the direction of the cathode (2). In order to maintain electric neutrality in the compartments where the anode (1) is placed, an oxidation reaction takes place, and in the compartment wherein the cathode (2) is placed, a reduction reaction takes place. Hereby a flow of electrons is generated in the electric circuit (3), wherein the anode (1) and cathode (2) are connected. In this electric circuit (3) electric work is performed by an electric apparatus (4), here symbolically presented by means of a bulb.

In figure 1 in dashes a dialytic cell, formed from a membrane couple of an anion exchange membrane (a) and a cation exchange membrane (c) and a mass of a solution having a high electrolyte concentration and a solution having a low electrolyte concentration (r). The number (N) of dialytic cells (here N=1) may be increased to increase the potential difference between the anode and cathode.

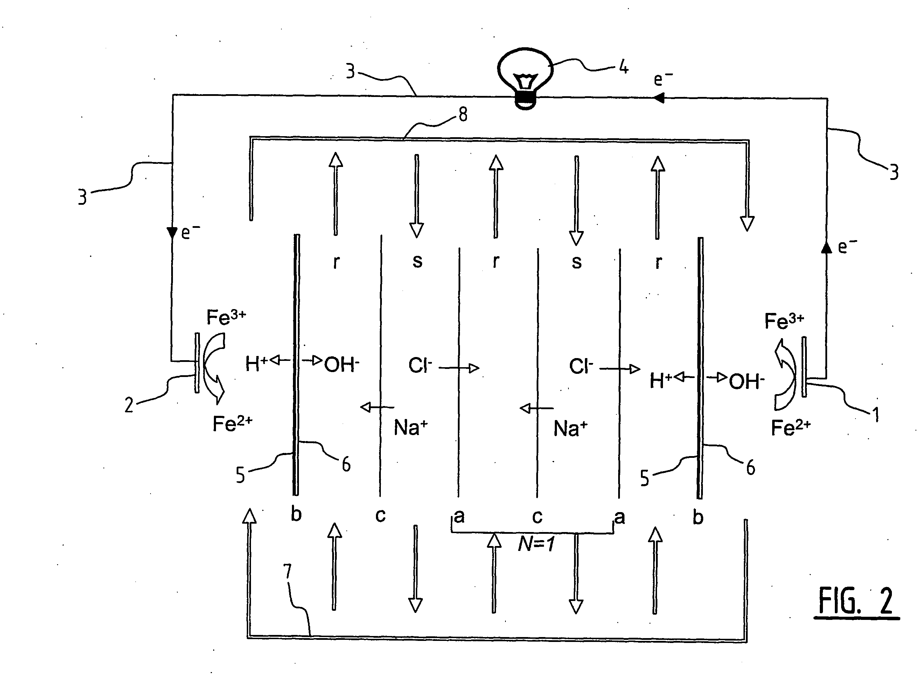

Figure 2 schematically shows an overview of an embodiment of the device according to the invention. Elements corresponding to those from figure 1 are designated with the same reference number or letters. Characteristic of the device according to the invention is that at the anode (1) Fe(II) is oxidised to Fe(III), and that at the cathode (2) Fe(III) is reduced to Fe(II). In order to maintain a low pH in the compartment, wherein the cathode (2) is placed, in this embodiment of the device according to the invention a bipolar membrane (b) is placed between the anion exchange membranes (a) and cation exchange membranes (c) and the cathode (2). This bipolar membrane (b) is places such that the cation exchange part (5) is directed to the cathode (2). The anion exchange part (6) is directed from the cathode (2). In the bipolar membrane (b) water fission takes place, whereby nett proton transport to the cathode compartment takes place. This helps in maintaining a low pH in the cathode compartment, wherein the cathode (2) is placed. Also between the anode compartment, wherein the anode 1 is placed and the anion exchange membranes (a) and cation exchange membranes (c) a bipolar membrane (b) is placed. This bipolar membrane (b) allows nett proton transport from the anode compartment. This somewhat causes an increase of the pH in the anode compartment.

For regenerating Fe(II) the anode fluidum may be transferred to the cathode compartment, as is indicated by arrow 7. Similarly Fe(III) may be transferred to the anode compartment, as is indicated by arrow 8. Pumping of the anode fluidum to the cathode and of the cathode fluidum to the anode not only serves the function of regenerating Fe(II) and Fe(III), but also serves for the pH regulation of the anode compartment and cathode compartment. Flow 8 for example has a pH of about 1-3. Flow 7 for example has a pH of about 2-3.

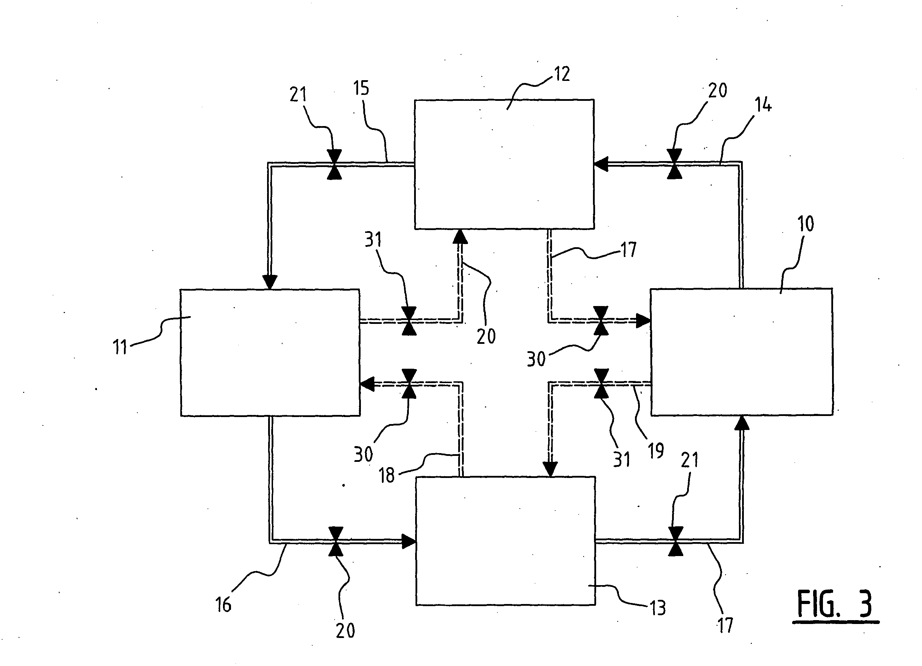

Figure 3 schematically shows an overview of an embodiment of the device according to the invention. In this embodiment the means for transferring the anode fluidum to the cathode compartment and the means for transferring the cathode fluidum to the anode compartment are arranged such that shortcircuiting of the anode and cathode via contact between the anode fluidum and cathode fluidum is prevented. Figure 3 is aimed mainly at those measures, taken to transfer the anode fluidum and cathode fluidum to the cathode compartment and anode compartment. Therefore, further details of the device are not shown.

Figure 3 shows two embodiments. The first embodiment comprises: anode compartment (10), cathode compartment (11), a first buffer compartment 12, a second buffer compartment 13, conduits 14, 15, 16, 17 and closing devices 20, 21. The second embodiment comprises the above mentioned element from the first embodiment and also conduit 17, 18, 19, 20 and closing devices 30, 31.

In the first embodiment of the device the anode fluidum may be pumped from the anode compartment 10 via conduit 14 to the first buffer compartment 12 and from there via conduit 15 to the cathode compartment 11. The cathode fluidum may be pumped from the cathode compartment 11 via conduit 16 to the second buffer compartment 13 and from there via conduit 17 to the anode compartment 10. Due to the presence of closing devices 20, 21, direct contact between the anode fluidum and cathode fluidum is prevented. During pumping of the anode fluidum to the first buffer compartment 12 and of the cathode fluidum to the second buffer compartment 13 closing device 20 is opened, while closing device 21 is closed. As soon as at least part of the anode fluidum is pumped to the first buffer compartment 12 and at least part of the cathode fluidum is pumped to the second buffer compartment 13, closing devices 20 may be closed and simultaneously or after that closing devices 21 may be opened. Hereby the anode fluidum may be pumped from the first buffer compartment 12 to the cathode compartment 11, and the cathode fluidum may be pumped from the second buffer compartment 13 to the anode compartment 10.

It is preferred that during the transfer of the anode fluidum to the cathode compartment and of the cathode fluidum to the anode compartment the process is not interrupted. This may be achieved by pumping the anode fluidum and cathode fluidum only partially to the cathode compartment 11 and anode compartment 10. Hereby sufficient volume of the anode fluidum and cathode fluidum remains in the anode compartment 10 and cathode compartment 11, to let the anode reaction and cathode reaction proceed.

The second embodiment in figure 3 is also provided with conduits 17 and 18, which run back from the first 12 and second buffer compartment 13 to the anode compartment 10 and cathode compartment 11 and conduits 19, 20, which run from the anode compartment 10 and cathode compartment 11 to the first 12 and second buffer compartment 13. These conduits are provided with closing devices 30, 31. By opening closing devices 30 simultaneously with closing devices 20, while closing devices 21 and 31 are closed, a cyclic flow between the anode compartment 10 and the first buffer compartment 12, and between the cathode compartment 11 and the second buffer compartment 13 may be initiated. When the anode fluidum must be transferred from the anode compartment 10 to the cathode compartment 11 and the cathode fluidum must be transferred from the cathode compartment 11 to the anode compartment 10, closing devices 20, 30 are closed and simultaneously or thereafter closing devices 21 and 31 may be opened. Hereby a circular flow between the first buffer compartment 12 and the cathode compartment 11, and between the second buffer compartment 13 and the anode compartment 10 may be initiated.

Also in this embodiment the reversed electrodialysis process need not be interrupted for the transfer of the anode fluidum and cathode fluidum to the cathode compartment 11 and anode compartment 10 respectively.

### Example

The voltage of the cathode, using the reaction Fe³⁺ + e⁻ -> Fe²⁺ was measured at different current densities. The electrode potential was measured relative to the reference electrode Ag/AgCl, 3M KCl (Prosense Qis, Oosterhout, The Netherlands). The cathode fluidum comprised Fe₂(SO₄)₃, buffered at pH = 2.5. The current was provided by an external current source.

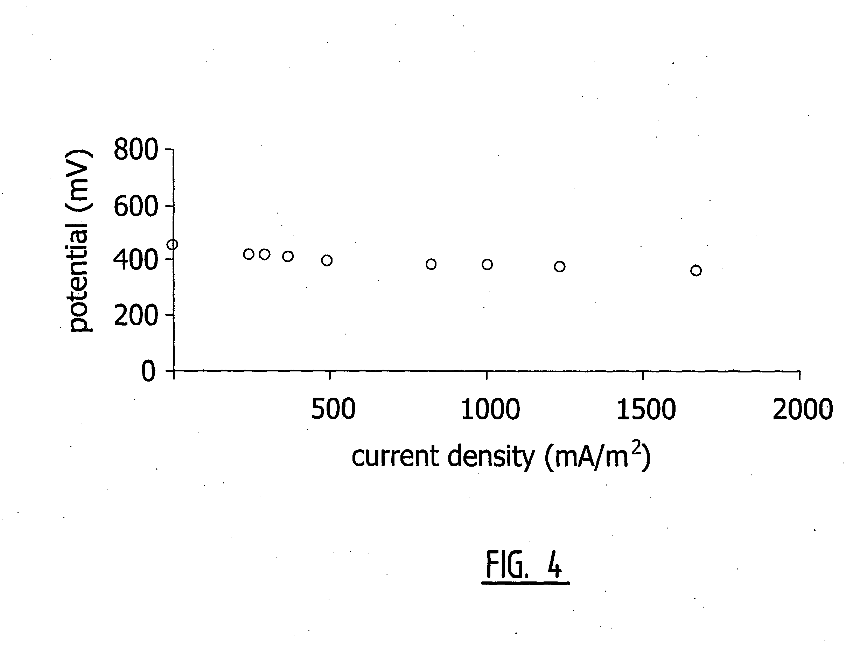

From figure 4 it may be deduced that the cathode potential in the area, relevant for a reversed electrodialysis process (500-1500 mA/m²), essentially does not differ from the zero potential (0 mA/m²). The overpotential in this area is within the order of several tens of milli volts. This is substantially less than the 6 Volt, described in the literature for a general reversed electrodialysis reaction.

As the reaction of the iron couple at the anode proceeds in the reversed direction (Fe²⁺ -> Fe³⁺ + e⁻), it may be expected that the overpotential of the anode reaction is within the same order.

## Claims

1. Device for performing a reversed electrodialysis process comprising:
(i) at least one anode compartments provided with an anode (1), placed in an anode fluidium comprising reagents for an oxidative reaction comprising Fe(II);
(ii) at least one, from the anode compartments separated, cathode compartments provided with a cathode (2), placed in a cathode fluidum comprising reagents for a reduction reaction comprising Fe(III);
(iii) at least one cation exchange membranes (c) and anion exchange membranes (a), placed alternatingly between the cathode and anode, whereby compartments, the electrolyte compartments, are formed between the cation exchange membranes (c) and anion exchange membranes (a);
(iv) low osmotic electrolyte solutions (r), having low electrolyte concentrations and high osmotic electrolyte solutions (s), having electrolyte concentrations higher than the low osmotic electrolyte solutions, which high osmotic and low osmotic electrolyte solutions are placed alternatingly in the electrolyte compartments;
**characterized in that** the separation between the anode compartment and the anode compartment abutting electrolyte compartment and/or the separation between the cathode compartment and the cathode compartment abutting electrolyte compartment is formed by a bipolar membrane (b), said bipolar membrane (b) when placed between the cathode and the cation exchange membranes (c) and anion exchange membranes (a), being positioned such that the cation exchange part (5) of the bipolar membrane (b) is directed towards the cathode (2) and when placed between the anode (1) and the cation exchange membranes (c) and anion exchange membranes (a), being positioned such that the anion exchange part (6) of the bipolar membrane (b) is directed towards the anode.

2. Device according to claim 1, wherein Fe(II) and Fe(III) are present essentially in soluble form in the anode fluidum and cathode fluidum.

3. Device according to claims 1-2, wherein the anode fluidum and cathode fluidum have a pH value of 0-3, preferably of 2-3.

4. Device according to claims 2-3, wherein the concentration Fe(III) ions and Fe(II) ions in soluble form comprise at least 5 mM, preferably at least 10 mM, and more preferably is within the range of 5 mM - 10 M, more preferably 10 mM - 1 M, most preferably between 10-200 mM.

5. Device according to any of the claims 1-4, further comprising means for regenerating Fe(II) used at the anode (1) and/or Fe(III) used at the cathode (2).

6. Device according to claim 5, wherein the means for regenerating Fe(II) used at the anode (1) comprise means (7) for transferring the anode fluidum to the cathode compartment.

7. Device according to claim 5, wherein the means for regenerating Fe(III) used at the cathode (2) comprise means (8) for transferring the cathode fluidum to the anode compartment (10).

8. Device according to claims 6-7, wherein the means (7) for transferring the anode fluidum to the cathode compartment (11) and/or the means (8) for transferring the cathode fluidum to the anode compartment (10) are designed such that short circuiting of the anode (1) and cathode (2) via contact between the anode fluidum and cathode fluidum is prevented.

9. Device according to claim 8, further provided with a first buffer compartment and a second buffer compartment, wherein the means for transferring the anode fluidum to the cathode compartment (11) are suitable for transferring the anode fluidum at least partially to the first buffer compartment (2) and from there to the anode compartment (11), and the means for transferring the cathode fluidum to the anode compartment (10) are suitable for transferring the cathode fluidum at least partially to the second buffer compartment (13) and from there to the anode compartment (10).

10. Method for generating electric energy comprising the steps of:
(i) providing a device according to any one of the claims 1-9;
(ii) electrically connecting the anode and cathode.

11. Method according to claim 10, wherein periodically the anode fluidum is transferred at least partially to the cathode compartment (11), and the cathode fluidum is transferred at least partially to the anode compartment (10).

## Patentansprüche

1. Vorrichtung zum Durchführen eines umgekehrten Elektrodialyseverfahrens, mit:
(i) mindestens einem Anodenraum, der mit einer Anode (1) versehen ist, die in einem Anodenfluid platziert ist, das Reagenzien für eine oxidative Reaktion, die Fe(II) aufweisen, aufweist;
(ii) mindestens einem von dem Anodenraum getrennten Kathodenraum, der mit einer Kathode (2) versehen ist, die in einem Kathodenfluid platziert ist, das Reagenzien für eine Reduktionsreaktion, die Fe(III) aufweisen, aufweist;
(iii) mindestens einer Kationenaustauschmembran (c) und einer Anionenaustauschmembran (a), die abwechselnd zwischen der Kathode und der Anode platziert sind, wodurch Räume, die Elektrolyträume, zwischen der Kationenaustauschmembran (c) und der Anionenaustauschmembran (a) gebildet sind;
(iv) niederosmotische Elektrolytlösungen (r), die niedrige Elektrolytkonzentrationen haben, und hochosmotische Elektrolytlösungen (s), die höhere Elektrolytkonzentrationen als die niederosmotischen Elektrolytlösungen haben, wobei die hochosmotischen und niederosmotischen Elektrolytlösungen abwechselnd in den Elektrolyträumen platziert sind;
**dadurch gekennzeichnet, dass** die Trennung zwischen dem Anodenraum und dem an den Anodenraum angrenzenden Elektrolytraum und/oder die Trennung zwischen dem Kathodenraum und dem an den Kathodenraum angrenzenden Elektrolytraum durch eine bipolare Membran (b) gebildet ist, wobei die bipolare Membran (b), wenn dieselbe zwischen der Kathode und der Kationenaustauschmembran (c) und der Anionenaustauschmembran (a) platziert ist, derart positioniert ist, dass der Kationenaustauschteil (5) der bipolaren Membran (b) hin zu der Kathode (2) gerichtet ist, und wenn dieselbe zwischen der Anode (1) und der Kationenaustauschmembran (c) und der Anionenaustauschmembran (a) platziert ist, derart positioniert ist, dass der Anionenaustauschteil (6) der bipolaren Membran (b) hin zu der Anode gerichtet ist.

2. Vorrichtung nach Anspruch 1, bei der Fe(II) und Fe(III) im Wesentlichen in einer löslichen Form in dem Anodenfluid und dem Kathodenfluid anwesend sind.

3. Vorrichtung nach den Ansprüchen 1 - 2, bei dem das Anodenfluid und das Kathodenfluid einen pH-Wert von 0 - 3 vorzugsweise 2 - 3 haben.

4. Vorrichtung nach den Ansprüchen 2 - 3, bei der die Konzentration von Fe(III)-Ionen und Fe(II)-Ionen in einer löslichen Form mindestens 5 mM, vorzugsweise mindestens 10mM, aufweist und bevorzugter innerhalb des Bereichs von 5mM - 10M, bevorzugter 10mM - 1M und am bevorzugtesten zwischen 10 - 200mM ist.

5. Vorrichtung nach einem der Ansprüche 1 - 4, die ferner eine Einrichtung zum Regenerieren von Fe(II), das bei der Anode (1) verwendet wird, und/oder Fe(III), das bei der Kathode (2) verwendet wird, aufweist.

6. Vorrichtung nach Anspruch 5, bei der die Einrichtung zum Regenerieren von Fe(II), das bei der Anode (1) verwendet wird, eine Einrichtung (7) zum Übertragen des Anodenfluids zu dem Kathodenraum aufweist.

7. Vorrichtung nach Anspruch 5, bei der die Einrichtung zum Regenerieren von Fe(III), das bei der Kathode (2) verwendet wird, eine Einrichtung (8) zum Übertragen des Kathodenfluids zu dem Anodenraum (10) aufweist.

8. Vorrichtung nach den Ansprüchen 6 - 7, bei der die Einrichtung (7) zum Übertragen des Anodenfluids zu dem Kathodenraum (11) und/oder die Einrichtung (8) zum Übertragen des Kathodenfluids zu dem Anodenraum (10) derart entworfen sind, dass ein Kurzschließen der Anode (1) und der Kathode (2) über einen Kontakt zwischen dem Anodenfluid und dem Kathodenfluid verhindert wird.

9. Vorrichtung nach Anspruch 8, die ferner mit einem ersten Pufferraum und einem zweiten Pufferraum versehen ist, wobei die Einrichtung zum Übertragen des Anodenfluids zu dem Kathodenraum (11) zum Übertragen des Anodenfluids zu mindestens teilweise dem ersten Pufferraum (2) und von dort zu dem Anodenraum (10) geeignet ist, und die Einrichtung zum Übertragen des Kathodenfluids zu dem Anodenraum (10) zum Übertragen des Kathodenfluids zu mindestens teilweise dem zweiten Pufferraum (13) und von dort zu dem Anodenraum (10) geeignet ist.

10. Verfahren zum Erzeugen einer elektrischen Energie, mit folgenden Schritten:
(i) Bereitstellen einer Vorrichtung nach einem der Ansprüche 1 - 9;
(ii) elektrisches Verbinden der Anode und der Kathode.

11. Verfahren nach Anspruch 10, bei dem das Anodenfluid mindestens teilweise periodisch zu dem Kathodenraum (11) übertragen wird, und das Kathodenfluid mindestens teilweise zu dem Anodenraum (10) übertragen wird.

## Revendications

1. Dispositif pour effectuer un processus d'électrodialyse inverse comprenant :
(i) au moins un compartiment d'anode pourvu d'une anode (1), placé dans un milieu fluidique d'anode comprenant des réactifs pour une réaction d'oxydation comprenant des Fe(II) ;
(ii) au moins un, séparé des compartiments d'anode, compartiment de cathode pourvu d'une cathode (2), placé dans un milieu fluidique de cathode comprenant des réactifs pour une réaction de réduction comprenant des Fe(III) ;
(iii) au moins une membrane d'échange de cations (c) et une membrane d'échange d'anions (a), placées alternativement entre la cathode et l'anode, moyennant quoi des compartiments, les compartiments d'électrolyte, sont formés entre les membranes d'échange de cations (c) et les membranes d'échange d'anions (a) ;
(iv) des solutions d'électrolyte osmotiques faibles (r), ayant de faibles concentrations en électrolyte, et des solutions d'électrolyte osmotiques fortes (s), ayant des concentrations en électrolyte supérieures à celles des solutions d'électrolyte osmotiques faibles, lesquelles solutions d'électrolyte osmotiques fortes et osmotiques faibles sont placées alternativement dans les compartiments d'électrolyte ;
**caractérisé en ce que** la séparation entre le compartiment d'anode et le compartiment d'électrolyte en butée contre le compartiment d'anode et / ou la séparation entre le compartiment de cathode et le compartiment d'électrolyte en butée contre le compartiment de cathode sont formées par une membrane bipolaire (b), ladite membrane bipolaire (b), lorsqu'elle est placée entre la cathode et les membranes d'échange de cations (c) et les membranes d'échange d'anions (a), étant positionnée de sorte que la partie d'échange de cations (5) de la membrane bipolaire (b) soit dirigée vers la cathode (2) et, lorsqu'elle est placée entre l'anode (1) et les membranes d'échange de cations (c) et les membranes d'échange d'anions (a), étant positionnée de sorte que la partie d'échange d'anions (6) de la membrane bipolaire (b) soit orientée vers l'anode.

2. Dispositif selon la revendication 1, dans lequel les Fe(II) et les Fe(III) sont présents essentiellement sous forme soluble dans le milieu fluidique d'anode et dans le milieu fluidique de cathode.

3. Dispositif selon les revendications 1 et 2, dans lequel le milieu fluidique d'anode et le milieu fluidique de cathode ont une valeur de pH de 0 à 3, de préférence de 2 à 3.

4. Dispositif selon les revendications 2 et 3, dans lequel la concentration des ions Fe(III) et des ions Fe(II) sous forme soluble est égale à au moins 5 mM, de préférence au moins 10 mM, et plus préférablement est dans la plage de 5 mM à 10 M, plus préférablement de 10 mM à 1 M, plus préférablement entre 10 et 200 mM.

5. Dispositif selon l'une quelconque des revendications 1 à 4, comprenant en outre des moyens pour régénérer les Fe(II) utilisés au niveau de l'anode (1) et / ou les Fe(III) utilisés au niveau de la cathode (2).

6. Dispositif selon la revendication 5, dans lequel les moyens pour régénérer les Fe(II) utilisés au niveau de l'anode (1) comprennent des moyens (7) pour transférer le milieu fluidique d'anode vers le compartiment de cathode.

7. Dispositif selon la revendication 5, dans lequel les moyens pour régénérer les Fe(III) au niveau de la cathode (2) comprennent des moyens (8) pour transférer le milieu fluidique de cathode vers le compartiment d'anode (10).

8. Dispositif selon les revendications 6 et 7, dans lequel les moyens (7) pour transférer le milieu fluidique d'anode vers le compartiment de cathode (11) et / ou les moyens (8) pour transférer le milieu fluidique de cathode vers le compartiment d'anode (10) sont conçus de sorte qu'un court-circuit entre l'anode (1) et la cathode (2) par l'intermédiaire d'un contact entre le milieu fluidique d'anode et le milieu fluidique de cathode soit évité.

9. Dispositif selon la revendication 8, pourvu en outre d'un premier compartiment tampon et d'un deuxième compartiment tampon, dans lequel les moyens pour transférer le milieu fluidique d'anode vers le compartiment de cathode (11) sont appropriés pour transférer le milieu fluidique d'anode au moins partiellement vers le premier compartiment tampon (2) et de là vers le compartiment d'anode (11), et les moyens pour transférer le milieu fluidique de cathode vers le compartiment d'anode (10) sont appropriés pour transférer le milieu fluidique de cathode au moins partiellement vers le deuxième compartiment tampon (13) et de là vers le compartiment d'anode (10).

10. Procédé pour générer de l'énergie électrique, comprenant les étapes suivantes :
(i) fournir un dispositif selon l'une quelconque des revendications 1 à 9 ;
(ii) connecter électriquement l'anode et la cathode.

11. Procédé selon la revendication 10, dans lequel, périodiquement, le milieu fluidique d'anode est transféré au moins partiellement vers le compartiment de cathode (11), et le milieu fluidique de cathode est transféré au moins partiellement vers le compartiment d'anode (10).
